# EUROPÄISCHE PATENTANMELDUNG

(11) **EP 3 828 320 A1**
(43) Veröffentlichungstag der Anmeldung: **02.06.2021**
(21) Anmeldenummer: 19211398.3
(22) Anmeldetag: 26.11.2019
(51) Int. Cl.: D01D 10/06, D01F 2/02, D06B 3/02, D01D 5/14

(54) **GEGENSTROMWÄSCHE**

(71) Anmelder: LENZING AKTIENGESELLSCHAFT, 4860 Lenzing (AT)
(72) Erfinder: Pillichshammer, Johann, 4890 Frankenmarkt (AT); Schrempf, Christoph, 4701 Bad Schallerbach (AT); Gressenbauer, Andreas, 4861 Schörfling am Attersee (AT); Reiter, Ernst, 4861 Schörfling (AT); Neunteufel, Martin, Lantau Island, New Territories (HK)
(74) Vertreter: Grünecker Patent- und Rechtsanwälte PartG mbB

(57) **Zusammenfassung**

Die vorliegende Erfindung betrifft ein Verfahren zur Wäsche von Filamenten.

## Beschreibung

Die vorliegende Erfindung betrifft ein Verfahren zur Wäsche von Filamenten.

### Stand der Technik

Filamente, insbesondere auf der Grundlage von Cellulose werden in großem Maßstab hergestellt und in vielen Bereichen, wie der Textilindustrie aber auch in technischen Bereichen, eingesetzt. Ein Beispiel derartiger Filamente sind Filamente, die nach dem Lyocell-Verfahren aus einer Zusammensetzung von Cellulose in einem Lösungsmittel, üblicherweise eine Mischung aus Wasser und N-Methylmorpholin-N-Oxid (NMNO) hergestellt werden. Die daraus hergestellt Spinnlösung wird zur Herstellung von Filamenten durch Düsen zu Filamenten gesponnen, die in einem wäßrigen Fällbad regeneriert werden. Die damit erhaltenen Lyocell-Filamente sind sogenannte Cellulose-Regeneratfasern, die sich durch eine besondere Kombination an Produkteigenschaften auszeichnen (wie hohe Trocken- und Nassfestigkeit bei gleichzeitig weichem Griff und guter Feuchtigkeitsabsorbtionsfähigkeit).

Durch die Tatsache, dass die einzelnen Bestandteile der Spinnlösung und der eingesetzten Fällbadlösung bei der Herstellung von Lyocell-Filamenten in geschlossenen Stoffkreisläufen geführt werden können, so dass ein hoher Grad an Wiederverwendung der eingesetzten Materialien erreicht wird, ist der Herstellungsprozess der Lyocell-Filamente umweltschonender, insbesondere im Vergleich mit anderen Cellulose-Regeneratfasern, wie Viskose. Darüber hinaus sind die im Verfahren eingesetzte Lösungsmittel (Wasser, sowie NMNO) als solches schon deutlich umweltfreundlicher als beispielsweise die beim Viskose-Verfahren einzusetzenden Komponenten.

Nach der Fällung/Regenerierung der Lyocell-Filamente werden die erhaltenen Filamente weiteren Behandlungsstufen zugeführt. Eine wesentliche Behandlungsstufe ist die Wäsche der erhaltenen Filamente, wodurch insbesondere noch anhaftendes Lösungsmittel (NMNO), aber auch andere Bestandteile der Spinnlösung und/oder des Fällbads entfernt werden.

Für derartige Wäschen gibt es eine ganze Reihe an Ansätzen, wie die klassische Badwäsche (das Filament wird durch ein Bad mit Waschflüssigkeit geleitet), die gelenkte Badwäsche (eine der klassischen Badwäsche ähnliche Ausführungsform), eine Wäsche durch die Aufbringung von Waschflüssigkeit auf die Filamente durch Düsen oder Strahler, oder auch apparativ aufwendigere Verfahren, wie alternierende Rollenwäscher (bei den das Filament erneut durch ein Bad mit Waschflüssigkeit geführt wird, wobei zwischen einzelnen Waschschritten das Filament über eine Umlenkrolle außerhalb der Waschflüssigkeit geführt wird, so dass beispielsweise überschüssige Flüssigkeit abtropfen kann), perforierte Trommelwäscher oder Druckkammerwäscher.

All diese Ansätze zur Wäsche haben gemeinsam, dass das Filament entweder von einer sehr großen Waschwassermenge umgeben ist, oder mit einer sehr großen Wassermenge beaufschlagt wird. Dabei kommt allerdings nur ein geringer Teil des Wassers direkt mit dem Filament in Berührung. Gleichzeitig wird durch Akkumulation beispielsweise des ausgewaschenen Lösungsmittels eine Anreicherung dieser Komponenten im Waschbad erzielt, so dass die Qualität der Wäsche abnimmt, solange keine Gegenmaßnahmen ergriffen werden. Geeignete Gegenmaßnahmen, wie der Austausch des Wassers, führen erneut zu einer Erhöhung der eingesetzten Wassermenge und somit zu einer geringeren Umweltfreundlichkeit und zu einem höheren Kosteneinsatz.

Zwar gibt es auch bei derartigen Waschverfahren den Ansatz, dass das Wasser gesammelt und im Kreislauf gefahren und mehrere Male an der gleichen Stelle zum Waschen verwendet wird, jedoch führt auch dies nach einer gewissen Zeit zu einer Verringerung der Waschleistung. Erneut kann dies nur durch Zuführen neuen Frischwassers ausgeglichen werden.

Derartige Waschverfahren und Anlagen sind beispielsweise in der US 4,549,415 beschrieben. Hier wird zwar bereits mit einer Kaskade an Waschbereichen gearbeitet, diese stehen jedoch miteinander in Verbindung und das Waschen erfolgt durch das Führen der Fasern durch das Waschbad, was erneut eine große Menge an Waschflüssigkeit erfordert.

Da bei allen diesen Ansätzen auch nur ein vergleichsweise geringer Teil des Waschwassers mit dem Filament in Berührung kommt, sich jedoch insbesondere das ausgewaschene Lösungsmittel mit dem nicht, oder nur gering belastetem Wasser erneut vermischt, sinkt die Effizienz der Wäsche. Dies ist insbesondere im Hinblick auf die immer steigenden Ansprüche im Hinblick auf schonenden Ressourceneinsatz problematisch. Gleichzeitig werden insbesondere im Textilbereich, selbst wenn geringe Restmengen an Lösungsmittel o.ä. auf dem Filament weder gesundheitsbeeinträchtigend noch im Hinblick auf Tragekomfort etc. problematisch sind, immer höhere Anforderungen an "Chemikalienfreiheit" gestellt.

Es besteht daher Bedarf an Verfahren zur Behandlung von Filamenten, die einerseits eine hocheffiziente und möglichst vollständige Entfernung und Lösungsmittel und Prozesschemikalien ermöglichen. Im Hinblick auf die Wäsche von Lyocell-Filamenten bedeutet dies insbesondere eine Entfernung des Lösungsmittels NMNO von hergestellten Lyocell-Filamenten. Gelichzeitig soll die Einsatzmenge der Waschflüssigkeit, im Fall von Lyocell-Filamenten also Wasser, so gering wie möglich sein.

### Kurze Beschreibung der Erfindung

Diese Aufgabe wird durch das Verfahren gemäß Anspruch 1 gelöst. Bevorzugte Ausführungsformen sind in den Unteransprüchen und auch in der nachfolgenden Beschreibung gegeben. Weiterhin wird diese Aufgabe durch ein System nach Anspruch 9 gelöst, wobei erneut bevorzugte Ausgestaltungen in den Unteransprüchen und der nachfolgenden Beschreibung angegeben sind.

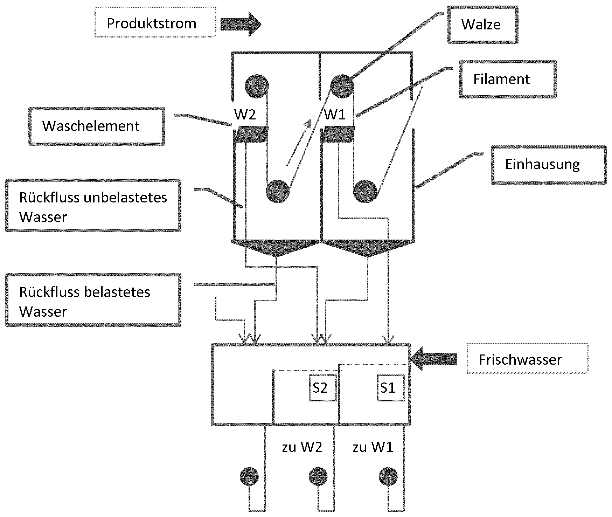

### Kurze Beschreibung der Figur

Die Figur zeigt schematisch den Ablauf einer Gegenstromwäsche bzw. ein System zur Gegenstromwäsche in Übereinstimmung mit der vorliegenden Erfindung unter Einsatz von zwei Waschstufen.

### Detaillierte Beschreibung der Erfindung

Die vorliegende Erfindung wird zunächst im Hinblick auf das Verfahren beschrieben. Dem Fachmann ist aber klar, dass die in diesem Zusammenhang gemachten Ausführungen analog ebenfalls für das beanspruchte System gelten. Das Verfahren der vorliegenden Erfindung ist bei einer Vielzahl an unterschiedlichen Filamenten anwendbar. Auch wenn die nachfolgende Beschreibung, insbesondere bei den bevorzugten Ausführungsformen auf die Wäsche von Lyocell-Filamenten mit der Waschflüssigkeit Wasser abzielt, zur Entfernung der Restmengen des Lösungsmittel NMNO, die noch an den Filamenten anhaften, ist dem Fachmann offensichtlich, dass dieses Verfahren auch bei anderen Arten an Filamenten zum Einsatz kommen kann, unter Einsatz anderer Waschflüssigkeiten und zur Entfernung anderer an den Filamenten anhaftenden Komponenten.

Das erfindungsgemäße Verfahren zeichnet sich einerseits dadurch aus, dass zu waschendes Filament und die Waschflüssigkeit im Gegenstrom geführt werden. In der Figur wird dies durch die gegenläufigen Pfeilrichtungen für Frischwasser (Waschflüssigkeit) und Produktstrom (Filament) angezeigt. Dies bedeutet, dass unbelastete Waschflüssigkeit der letzten Waschstufe zugeführt wird, während das zu behandelnde Filament der ersten Waschstufe zugeführt wird. In der Figur wird exemplarisch ein Verfahren mit zwei Waschstufen gezeigt, erfindungsgemäß bevorzugt sind allerdings Verfahren mit einer deutlich höheren Zahl an Waschstufen. Als geeignet haben sich Verfahren mit vorzugsweise 2 bis 60, insbesondere 10 bis 50 und weiter bevorzugt 20 bis 40 Waschstufen. Die Anzahl der Waschstufen kann in Abhängigkeit vom zu erreichenden Ergebnis (also beispielsweise Restanteil an definierten Stoffen auf der Faser, wie NMNO) und Produkteigenschaften, wie der Fadenstärke des Filaments/Filamenentbündels (größere Fadenstärke (also im Grunde höhere Werte für den Durchmesser des Filaments bzw. Filamentbündels) erfordern häufig eine höhere Anzahl an Waschstufen) und/oder der Produktionsgeschwindigkeit (höhere Geschwindigkeiten erfordern ebenfalls häufig eine größere Anzahl an Waschstufen) ausgewählt werden.

Diese Verfahrensführung stellt sicher, dass in der letzten Waschstufe, bei der die zu behandelnden Filamente nur noch die geringste Menge an zu entfernenden Komponenten aufweisen, frische Waschflüssigkeit zum Einsatz kommt, so dass eine ausgezeichnete Wirkung erzielt wird.

Gleichzeitig zeichnet sich das erfindungsgemäße Verfahren dadurch aus, dass das Filament weder durch an Bad an Waschflüssigkeit geleitet, noch mit einer großen Menge an Waschflüssigkeit besprüht werden muss. Um die Einsatzmenge an Waschflüssigkeit in dem erfindungsgemäßen Verfahren zu minimieren, werden die zu waschenden Filamente in jeder Waschstufe durch ein Waschelement (W1, W2) so mit der Waschflüssigkeit beaufschlagt, dass lediglich soviel Flüssigkeit auf die Filamente übertragen werden, wie die Filamente aufnehmen und binden können. Dies ist für eine effiziente Waschwirkung völlig ausreichend, da die relevanten Stoffaustauschabläufe bei der Wäsche/Auswaschung lediglich in sehr dünnen Bereichen direkt an der Oberfläche der Filamente stattfinden (also beispielsweise bei Lyocell-Filamenten der Übergang der anhaftenden Restmengen an NMNO vom Filament in die Waschflüssigkeit. Es hat sich gezeigt, dass der gezielte Einsatz minimierter aber optimierter Mengen an Waschflüssigkeit für eine effiziente Behandlung völlig ausreichend ist - mit wesentlich größeren Einsatzmengen an Waschflüssigkeit wird lediglich die Einsatzmenge an Waschflüssigkeit aber nicht die Wirksamkeit der Wäsche erhöht.

Eine derart gezielte und minimale Beaufschlagung der Filamente mit Waschflüssigkeit kann beispielsweise erreicht werden, indem das Waschelement (W1, W2) einen dünnen, fallenden Film an Waschflüssigkeit (insbesondere Wasser) zur Verfügung stellt, an dem die zu waschenden Filamente so vorbeigeführt werden, dass sie gerade von der Oberfläche der Waschflüssigkeit benetzt werden können. So wird die Übertragung einer geringen aber ausreichenden Menge an Waschflüssigkeit ermöglicht. Andere Ausgestaltungen des Waschelements sind beispielsweise mit Waschflüssigkeit benetzte Walzen oder Rollen, insbesondere langsam laufende Kontaktwalzen, die dem Fachmann bekannt sind, erfindungsgemäß aber in einer neuen und erfinderischen Weise eingesetzt werden (ggf. mit geeigneter Oberflächenstrukturierung; wie Nuten und Rillen, die umlaufend oder in Achsrichtung vorgesehen sind). Diese Walzen und/oder Rollen können durch Sprühelemente, kleine Eintauchbäder oder ähnliche Einrichtungen mit Waschflüssigkeit beaufschlagt werden. Eine weitere Möglichkeit des Aufbringens der gewünschten geringen Menge an Waschflüssigkeit auf das Filament/Filamentbündel ist der Einsatz eines Präparationsfadenführers. Derartige Vorrichtungen, die dem Fachmann bekannt sind, sind so ausgestaltet, dass von einer Seite die Waschflüssigkeit beaufschlagt wird, so dass auf der anderen Seite ein Flüssigkeitsfilm erzeugt wird, an dem das Filament/Filamentbündel so vorbeigeführt wird, dass die gewünschte Benetzung mit Waschflüssigkeit erreicht wird. Geeignet sind auch Fadenführer in Kombination mit einem Staustrahlwäscher. Dabei wird das Filament/Filamentbündel durch eine Düse, die vorzugsweise quer zur Transportrichtung des Filaments/Filamentbündels vorgesehen ist, mit Waschflüssigkeit benetzt.

Die zu waschenden Filamente/Filamentbündel werden, wie bereits vorstehend beschrieben, so an den durch die unterschiedlichen Elemente bereitgestellten Flüssigkeitsfilme vorbeigeführt, so dass die gewünschte Benetzung mit Waschflüssigkeit erreicht wird, bei gleichzeitiger Minimierung der eingesetzten Menge an Waschflüssigkeit. Die Filamente/Filamentbündel können dabei in beliebiger Ausrichtung geführt werden, von vertikal, wie in der Abbildung skizziert, bis horizontal, wie bei Walzen/Rollen.

Dadurch wird sichergestellt, dass in einer Waschstufe jeweils nur die absolut notwendige Menge an Waschflüssigkeit verwendet wird. Die in einer gegebenen Waschstufe eingesetzte, aber nicht verbrauchte Waschflüssigkeit kann in derselben Waschstufe erneut wiedereingesetzt werden, beispielsweise durch eine geeignete Kreislaufführung der Waschflüssigkeit

Jede Waschstufe oder zumindest jeweils eine Gruppe an Waschstufen ist dabei beispielsweise durch eine Einhausung von den anderen Waschstufen bzw. Gruppen an Waschstufen getrennt, so dass insbesondere keine Vermischung der Waschflüssigkeitsmengen erfolgt, die tatsächlich zur Wäsche der Filamente eingesetzt wurden und daher nach Abtrennung von den Filamenten einen erhöhten Anteil an ausgewaschenen Komponenten aufweisen. Diese gebrauchte Waschflüssigkeit, wird in geeigneter Weise von den Filamenten/Filamentbündeln wieder entfernt, durch abschleudern, den Einsatz von Abstreifern, etc.. So wird sichergestellt, dass insbesondere keine unerwünschte Vermischung der in einer Waschstufe anfallenden Mengen an belasteter Waschflüssigkeit auftritt. Um aber auch hier eine möglichst gute Nutzung der Waschflüssigkeit zu ermöglichen, ist das erfindungsgemäße Verfahren so ausgestaltet, dass die in einer Waschstufe anfallende, belastete Menge an Waschflüssigkeit der jeweils vorhergehenden Waschstufe als Waschflüssigkeit zugeleitet wird. Ist nicht jede Waschstufen individuell von den anderen Waschstufen getrennt, sondern werden lediglich Gruppen an Waschstufen voneinander getrennt, ist es erfindungsgemäß ausreichend, wenn mindestens zwei unterschiedliche Gruppen an Waschstufen vorliegen, vorzugsweise, wie bereits vorstehend ausgeführt, jedoch deutlich mehr als 2 Gruppen an Waschstufen.

Unter Verweis auf die Figur kann dies wie folgt beschrieben werden. In der letzten Waschstufe (rechte Waschstufe mit Waschelement W1) wir Frischwasser als Waschflüssigkeit eingesetzt. Dies wird aus dem Vorratsbehälter S1 zum Waschelement W1 geführt. Das am Waschelement W1 entlang geführte Filament nimmt eine Menge an Waschflüssigkeit auf, die vom Filament innerhalb der Waschstufe, beispielweise durch eine Umlenkrolle (einsetzbar sind hier aber auch anderer Verfahren zur Entfernung de Waschflüssigkeit, wie Abstreif- oder Quetschverfahren) wieder entfernt wird. Damit wird der durch die Waschflüssigkeit in dieser Stufe entfernte Anteil an NMNO (wenn Lyocell-Filamente mit Wasser gewaschen werden) abgetrennt. Diese mit NMNO leicht verunreinigte Waschflüssigkeit zwar für die letzte Waschstufe nicht mehr einsetzbar, jedoch ist der Anteil an NMNO noch so gering, dass diese Flüssigkeit als Waschflüssigkeit in der vorhergehenden Waschstufe mit Waschelement W2 immer noch sinnvoll eingesetzt werden kann.

Dazu wird die angefallene Menge an gebrauchter Waschflüssigkeit aus der letzten Stufe gezielt dem Vorratsbehälter S2 zugeführt, aus dem dann diese Waschflüssigkeit dem Waschelement W2 zugeführt werden kann. Diese gegenläufige Führung von Filament und Waschflüssigkeit kann entsprechend dem hier illustrierten Beispiel mit zwei Waschstufen auf eine höhere Anzahl an Waschstufen angewandt werden. Dabei wird jeweils die gebrauchte Waschflüssigkeit einer Stufe der jeweils vorhergehenden Stufe als "frische" Waschflüssigkeit zugeführt. Zwar erhöht sich dadurch der Anteil an ausgewaschenen Komponenten, wie NMNO in der Wachflüssigkeit, da gleichzeitig aber auch der Anteil dieser Komponenten auf den Filamenten in den jeweils vorangehenden Waschstufen höher ist, wird immer noch eine gute Waschwirkung in jeder Waschstufe realisiert.

Wie bereits vorstehend angegeben, erfolgt in jeder Waschstufe nicht nur die Benetzung der Filamente mit Waschflüssigkeit, diese Waschflüssigkeit wird auch in jeder Waschstufe wieder von den Filamenten abgetrennt (wobei durch die Abtrennung zwischen den individuellen Waschstufen eine unerwünschte Vermischung der einzelnen Waschflüssigkeiten verhindert wird).Die kann durch einfaches Abtropfen erfolgen, oder durch den Einsatz anderer Maßnahmen, wie das Führen um eine Rolle zum Abschleudern der Waschflüssigkeit oder durch den Einsatz von Abstreifern oder Quetschwerken. Diese abgetrennte gebrauchte Waschflüssigkeit wird in der vorhergehenden Waschstufe als frische Waschflüssigkeit verwendet.

Betrachtet man die letzten Waschstufe bei einem Waschverfahren für Lyocell-Filamente, so bedeutet dies, dass das in dieser Waschstufe erhaltene äußerst gering belastete verbrauchte Waschwasser der vorherigen Waschstufe zugeführt wird, in der die Lyocell-Filamente noch einen etwas höheren Anteil an beispielsweise an Lösungsmittel aufweisen. Zwar weist dann auch das in dieser Waschstufe verwendete Wasser einen gewissen Anteil an Lösungsmittel auf (durch die letzte Waschstufe), jedoch ist diese Waschflüssigkeit immer noch ausreichend sauber, so dass eine gute Wäsche des Filaments in der vorangehenden Waschstufe erfolgen kann. Das Waschwasser wird dazu erneut in das Waschelement der vorangehenden Waschstufe eingeführt, wo erneut durch geeignete Führung der Filamente sichergestellt wird, dass nur eine notwendige Menge an Wasser mit den Filamenten in Berührung kommt. Erneut wird in dieser Waschstufe, die durch eine eigene Einhausung von den benachbarten Waschstufen abgetrennt ist, durch geeignete Maßnahmen das Waschwasser von den Filamenten wieder entfernt (Rolle, Abstreifer, Quetschwerke), so dass sich auch in dieser Waschstufe wieder verbrauchtes Waschwasser ansammelt, das nun einen weiter erhöhten Anteil an NMNO aufweist. Dieses Waschwasser kann dann erneut der vorherigen Waschstufe zugeführt werden, so dass hier erneut das Waschwasser, das einen weiter erhöhten Anteil an NMNO aufweist, mit den Filamenten in Berührung gebracht werden kann, die ebenfalls noch einen höheren Anteil an NMNO aufweisen.

Die vorstehend beschriebenen Vorratsbehälter für die Waschflüssigkeiten der unterschiedlichen Waschstufen, können in geeigneter Form bereitgestellt werden. In der Figur ist schematisch ein Vorratsbehälter mit voneinander abgetrennten Bereichen für die unterschiedlichen Waschflüssigkeiten (S1, S2; die sich ja im Wesentlichen nur durch den Anteil an aus den Filamenten ausgewaschenen Komponenten unterscheiden, wobei der Gehalt dieser ausgewaschenen Komponenten langsam ansteigt, also in S2 höher ist als in S1 usw.) gezeigt, bei dem diese durch einfache Abtrennungen abgeteilt sind. So kann beispielsweise durch eine einfache Kontrolle des Füllstands der einzelnen Segmente (S1, S2) eine unerwünschte Vermischung verhindert werden.

Durch diese Verfahrensführung ist es möglich, die Filamente sequentiell im Gegenstrom mit Waschflüssigkeit in Berührung zu bringen, wobei die frische Waschflüssigkeit mit den nur noch am geringsten belasteten Filamenten in Kontakt kommen, während durch die Gegenstromführung der gebrauchten Waschflüssigkeit aus den jeweils vorherigen Waschstufen, trotz der schrittweise ansteigenden Anteile an ausgewaschenen Komponenten (wie NMNO) in der Waschflüssigkeit immer noch eine gute Wirksamkeit erreicht wird (da auch in den jeweiligen Waschstufen die Filamente noch mit einer größeren Menge an NMNO beaufschlagt sind, eine Situation, bei der allerdings mit NMNO belastetes Waschwasser immer noch eine effiziente Wäsche zur Verfügung stellt).

Durch eine derartige Verfahrensführung lässt sich der Verbrauch an Waschflüssigkeit der Wäschen deutlich senken, insbesondere im Vergleich mit den konventionellen Badwäschen. Gleichzeitig ist die Effizienz der Wäsche ausgezeichnet, so dass insgesamt mit geringeren Waschflüssigkeitsmengen größere Mengen an Filament gewaschen werden können. Es hat sich ebenfalls gezeigt, dass durch die erfindungsgemäße Verfahrensführung auch die Anzahl der Waschstufen insgesamt verringert werden kann. Durch die optionale Ausnutzung der Waschflüssigkeit und die Vermeidung des Einsatzes unnötig großer Mengen an Waschflüssigkeit kann unerwartet die Effizienz deutlich erhöht werden.

Die Wäsche von Lyocell-Filamenten kann also erfindungsgemäß so erfolgen, dass die aus dem Produktionsprozess kommenden Filamente aus dem Fällbad, ggf. nach Entfernung anhaftender Flüssigkeiten den einzelnen Waschstufen zugeführt werden. So kann, wie in der Figur skizziert, das Filament der ersten Waschstufe zugeführt werden und dort durch eine Umlenkrolle etc. im Wesentlichen senkrecht am Waschelement W2 vorbeigeführt werden. Dabei wird das Filament so geführt, dass es mit der Waschflüssigkeit in ausreichenden Kontakt kommt, um Waschflüssigkeit aufzunehmen. Das Waschelement W2 ist dabei so ausgestaltet, dass nicht verbrauchte Waschflüssigkeit in der Waschstufe erneut eingesetzt werden kann, durch geeignete Rückhaltung und Kreislausführung. Die in dieser Stufe eingesetzte Waschflüssigkeit S2 ist die aus der nachfolgenden Waschstufe gewonnene gebrauchte Waschflüssigkeit. Das Filament wird nun um eine weitere Rolle geleitet, die in dem in der Figur gezeigten Verfahren dazu dient, die Waschflüssigkeit vom Filament zu entfernen. Die so vom Filament abgetrennte, in dieser Waschstufe gebrauchte Waschflüssigkeit wird in geeigneter Weise gesammelt und kann dann durch die am unteren Ende der Waschstufe gezeigte Leitung abgeleitet werden, entweder (wenn nur zwei Waschstufen vorhanden sind) zum Ausleiten aus dem System oder zum Einsatz als frische Waschflüssigkeit in einer vorherigen Waschstufe (in der Figur nicht gezeigt). Wird das gebrauchte Waschwasser aus dem Waschsystem ausgeleitet, so kann dieses entweder aufgereinigt werden (so dass erneut Frischwasser für die letzte Waschstufe erhalten wird, neben einer geringen Menge an ausgewaschenen Komponenten, die beispielsweise entsorgt werden) oder diese Mischung, die im Wesentlichen ja nur Wasser und NMNO enthält, kann an geeigneter anderer Stelle bei der Filamentproduktion eingesetzt werden (beispielsweise zur Herstellung der Spinnlösung oder im Fällbad). So kann erneut eine äußerst Ressourcen schonende Gesamtbilanz des Waschflüssigkeitseinsatzes erreicht werden. Das Filament wird weiter in die nächste Waschstufe geführt, wo erneut durch ein Waschelement W1 das Filament mit Waschflüssigkeit beaufschlagt wird. Anschließend erfolgt erneut die Abtrennung der gebrachten Waschflüssigkeit vom Filament. Die in dieser Stufe gesammelte und abgeleitete Menge an gebrauchter Waschflüssigkeit wird als frische Waschflüssigkeit S2 im Waschelement W2 eingesetzt. Im Waschelement W1 wird als Waschflüssigkeit S1 das zugeführte Frischwasser eingesetzt.

Bei Versuchen mit Lyocell-Filamenten hat es sich gezeigt, dass durch den Einsatz einer erfindungsgemäßen Gegenstromwäsche der Restanteil an NMNO auf den Filamenten, bei gleicher Anzahl an Waschstufen, um mehr als 80% verringert werden konnte, im Vergleich mit Waschstufen ohne Trennung und Gegenstromführung. Da gleichzeitig die hier beschriebene Gegenstromwäsche auch bei sehr hohen Filament/Filamentbündel-Geschwindigkeiten (wie 1200 m/min und mehr) eine ausgezeichnete Stabilität und Effektivität aufweist (ohne Produktionsstörungen), kann das hier beschriebene Verfahren bzw. System zur Gegenstromwäsche problemlos in existierende Produktionsanlagen zur Lyocell-Filamentherstellung integriert werden. Durch eine weiterhin mögliche kontinuierliche Verfahrensführung können hohe Produktionskapazitäten sichergestellt werden.

Wie bereits vorstehend ausgeführt, stellt die vorliegende Erfindung auch ein System (Vorrichtung) zum Waschen von Filamenten zur Verfügung, das einfach mit bestehenden Filamentproduktionsanlagen kombiniert werden kann. Dieses System weist mindestens zwei Waschstufen auf, die jeweils ein Waschelement (W1, W2), das das Filament mit frischer Waschflüssigkeit so in Kontakt bringt, dass lediglich die Menge an Waschflüssigkeit auf das Filament übertragen wird, die am Filament selbst, beispielsweise durch Adhäsion haften bleibt, und ein Abtrennelement, welches die Waschflüssigkeit anschließen von den Filamenten wieder abtrennt umfasst, wobei das System so ausgestaltet ist, dass die abgetrennte Waschflüssigkeit (S2) so gesammelt wird, dass sie nicht mit der abgetrennten Waschflüssigkeit anderer Waschstufen des Verfahrens vermischt wird sondern als frische Waschflüssigkeit im Waschelement (W2) der vorangehenden Waschstufe zum Einsatz kommen kann.

Dazu umfasst das System weiterhin die notwendigen Leitungen zur Zu- und Abführung der Waschflüssigkeit sowie geeignete Vorrichtungen zur Aufrechterhaltung der Zu- und Abführung der Waschflüssigkeit auf, wie Pumpen oder ähnliches. Die Waschflüssigkeit jeder Waschstufe kann in Vorratskammern bereitgestellt werden, wobei diese Vorratskammern beispielsweise als nebeneinander angeordnete Teilbereiche eines großen Vorratsbehälters ausgestaltet sein können. In dieser Ausgestaltung sind die unterschiedlichen Vorratskammern beispielsweise durch Abtrennungen voneinander abgeteilt. Durch geeignete Nutzung unterschiedlicher Höhen an Unterteilungen kann so in einfacher Art und Weise ein Vorratsbehälter mit einer Vielzahl an Kammern zur Verfügung gestellt werden, die eine unerwünschte Rückvermischung höher belasteter Waschflüssigkeit mit weniger belasteter Waschflüssigkeit verhindert wird.

Die Waschelemente können insbesondere ausgewählt werden unter Elementen zur Bereitstellung eines fallenden Films an Waschflüssigkeit, Walzen und/oder Rollen, die eine Oberflächenstrukturierung aufweisen können, Präparationsfadenführern und einer Kombination an Staustrahlwäschern und Fadenführern.

Die Elemente zur Entfernung der Waschflüssigkeit von den Filamenten können insbesondere ausgewählt werden unter Schleuderelementen, Quetschwerken und/oder Abstreifern.

Die erfindungsgemäß vorzugsweise vorgesehenen Einhausungen trennen einzelne Waschstufen oder Gruppen an Waschstufen voneinander. Derartige Einhausungen können einfach aus geeigneten Materialien, wie Stahlblechen hergestellt werden. Die Einhausungen sind üblicher Weise so ausgestaltet, dass sich die gebrauchte Waschflüssigkeit (also die van den Filamenten wieder entfernte Waschflüssigkeit) am Boden sammelt, so dass eine einfache und sichere Ableitung in die Vorratskammer für die vorangehende Waschstufe möglich ist.

Das System umfasst weiterhin die zur Führung der Filamente notwendigen Walzen und/oder Rollen, so dass die Filamente durch das Waschsystem geleitet werden.

## Patentansprüche

1. Verfahren zum Waschen von Filamenten, **dadurch gekennzeichnet, dass** das zu waschende Filament und die Waschflüssigkeit im Gegenstrom geführt werden, wobei das Verfahren mindestens zwei Waschstufen umfasst und in jeder Waschstufe das Filament mit frischer Waschflüssigkeit mittels eines Waschelements (W1, W2) so in Kontakt gebracht wird, dass lediglich die Menge an Waschflüssigkeit auf das Filament übertragen wird, die am Filament selbst, beispielsweise durch Adhäsion haften bleibt, in jeder Waschstufe die Waschflüssigkeit anschließend von den Filamenten wieder abgetrennt wird und die abgetrennte Waschflüssigkeit (S2) so gesammelt wird, dass sie nicht mit der abgetrennten Waschflüssigkeit anderer Waschstufen des Verfahrens vermischt wird sondern als frische Waschflüssigkeit im Waschelement (W2) der vorangehenden Waschstufe zum Einsatz kommt.

2. Verfahren nach Anspruch 1, umfassend mindesten 5 Waschstufen.

3. Verfahren nach Anspruch 1 oder 2, wobei die Abtrennung der Waschflüssigkeit von den Filamenten in jeder Waschstufe durch Abstreif-, Quetsch- oder Schleuderelemente erfolgt.

4. Verfahren nach einem der Ansprüche 1 bis 3, wobei das Waschelement einen fallenden Film an Waschflüssigkeit erzeugt.

5. Verfahren nach einem der Ansprüche 1 bis 4, wobei die Filamente Lyocell-Filamente sind und die Waschflüssigkeit Wasser ist.

6. Verfahren nach einem der Ansprüche 1 bis 5, wobei die einzelnen Waschstufen durch Einhausungen von den anderen Waschstufen abgetrennt sind.

7. Verfahren nach einem der Ansprüche 1 bis 6, wobei die Filamente im Wesentlichen senkrecht am Waschelement vorbeigeführt werden.

8. Verfahren nach einem der Ansprüche 1 bis 7, bei dem die aus dem Verfahren abgetrennte gebrauchte Waschflüssigkeit entweder aufgereinigt wird, so dass frische Waschflüssigkeit für die letzte Waschstufe erhalten wird oder als Prozessflüssigkeit bei der Filamentherstellung zum Einsatz kommt.

9. System zum Waschen von Filamenten, wobei das Verfahren mindestens zwei Waschstufen umfasst und in jeder Waschstufe das Filament mit frischer Waschflüssigkeit mittels eines Waschelements (W1, W2) so in Kontakt gebracht wird, dass lediglich die Menge an Waschflüssigkeit auf das Filament übertragen wird, die am Filament selbst, beispielsweise durch Adhäsion haften bleibt, in jeder Waschstufe die Waschflüssigkeit anschließend von den Filamenten wieder abgetrennt wird und die abgetrennte Waschflüssigkeit (S2) so gesammelt wird, dass sie nicht mit der abgetrennten Waschflüssigkeit anderer Waschstufen des Verfahrens vermischt wird sondern als frische Waschflüssigkeit im Waschelement (W2) der vorangehenden Waschstufe zum Einsatz kommt.

10. System nach Anspruch 9, wobei das Waschelement ausgewählt ist unter Elementen zur Bereitstellung eines fallenden Films an Waschflüssigkeit, Walzen und/oder Rollen, die eine Oberflächenstrukturierung aufweisen können, Präparationsfadenführern und einer Kombination an Staustrahlwäschern und Fadenführern.

11. System nach Anspruch 9 oder 10, wobei die einzelnen Waschstufen oder Gruppen an Waschstufen durch Einhausungen voneinander getrennt sind.

12. System nach mindestens einem der Ansprüche 9 bis 11, wobei die Abtrennung der Waschflüssigkeit von den Filamenten durch Abstreifer, Quetschwerke und/oder Scheuderwalzen erfolgt.

13. System nach mindestens einem der Ansprüche 9 bis 12, wobei die Zuführung der Waschflüssigkeit zu den Waschelementen durch Pumpen erfolgt.

14. System nach mindestens einem der Ansprüche 9 bis 13, wobei die Waschflüssigkeit für jede Waschstufe in Vorratskammern bereitgestellt wird.

15. System nach mindestens einem der Ansprüche 11 bis 14, wobei jede Einhausung einen Auslass für die in der jeweiligen Waschstufe gebrauchte Waschflüssigkeit aufweist.
